# EUROPÄISCHE PATENTSCHRIFT

(11) **EP 4 147 259 B1**
(45) Veröffentlichungstag und Bekanntmachung des Hinweises auf die Patenterteilung: **22.10.2025**
(21) Anmeldenummer: 21735590.8
(22) Anmeldetag: 16.06.2021
(51) Int. Cl.: H02B 1/056, H02B 1/21, H02B 1/32, H02B 13/025, H01H 71/02, H01H 9/34

(54) **GERÄTETRÄGER FÜR MINDESTENS EINEN ELEKTRISCHEN SCHALTER UND SCHALTSCHRANK MIT SOLCH EINEM GERÄTETRÄGER**
CARRIER FOR AT LEAST ONE SWITCHING DEVICE AND SWITCHGEAR COMPRISING SUCH CARRIER
SUPPORT POUR AU MOINS UN APPAREIL DE COMMUTATION ET APPAREILLAGE DE COMMUTATION COMPRENANT UN TEL SUPPORT

(30) Priorität: 23.06.2020 DE 102020207773
(43) Veröffentlichungstag der Anmeldung: 15.03.2023
(73) Patentinhaber: Siemens Aktiengesellschaft, 80333 München (DE); Jean Müller GmbH Elektrotechnische Fabrik, 65343 Eltville (DE)
(72) Erfinder: BLEUEL, Harald, 65375 Oestrich-Winkel (DE); MADER, Jürgen, 65375 Oestrich-Winkel (DE); MALICH, Timo, 92245 Kümmersbruck (DE); PLECHINGER, Ekkehard, 92361 Röckersbühl (DE); RINGEL, Walter, 65399 Kiedrich (DE); WEBER, Christoph, 84061 Ergoldsbach (DE)
(74) Vertreter: Siemens Patent Attorneys
(86) Internationale Anmeldenummer: PCT/EP2021/066230
(87) Internationale Veröffentlichungsnummer: WO 2021/259729

(56) Entgegenhaltungen:
- EP-A1- 2 641 255
- EP-B1- 2 871 655
- DE-A1- 102013 113 943
- DE-U1- 20 212 065
- FR-A1- 2 704 352
- GB-A- 2 345 385
- KR-B1- 101 229 290

## Beschreibung

Die Erfindung betrifft einen Geräteträger für mindestens einen elektrischen Schalter sowie einen Schaltschrank mit solch einem Geräteträger.

Bei der Kurzschlussabschaltung von Leistungsschaltern entstehen Schaltgase, welche Verunreinigungen mit sich führen. Beispielsweise können diese Verunreinigungen Metallperlen oder Rußpartikel sein. Diese Verunreinigungen verteilen sich im Kurzschlussfall in der gesamten Anlage. Betroffene Schaltschränke und Verteilungen müssen daher oft aufwendig gereinigt werden, was zu Anlagenausfallzeiten führen kann. Ebenso kann es vorkommen, dass elektrische Geräte oder Leitungen in diesen Verteilungen durch von den Schaltgasen mitgeführten Metallperlen beeinträchtigt werden, beispielsweise Kurzschlüsse entstehen. Insgesamt können diese Verunreinigungen zu Anlagenausfallzeiten führen, entweder aufgrund von notwendigen Reinigungsschritten oder aufgrund von Wartungsarbeiten zur Behebung von Kurzschlüssen.

Das Schaltanlagengehäuse der GB 2 345 385 A umfasst eine Reihe von Fächern, die in ersten und zweiten vertikalen Säulen auf beiden Seiten eines gemeinsamen, vertikal verlaufenden Durchgangs angeordnet sind, dessen oberes Ende mit der Außenseite des Gehäuses in Verbindung steht. Jedes der Abteile umfasst eine innere seitliche Seitenwand neben dem Gemeinschaftsdurchgang, eine äußere seitliche Seitenwand gegenüber der inneren Seitenwand, obere und untere Wände und eine Rückwand sowie eine Vordertür. Jede der inneren Seitenwände umfasst mindestens eine innere Belüftungsöffnung, die mit dem Gemeinschaftsdurchgang kommuniziert, und jede der äußeren Seitenwände umfasst mindestens eine äußere Belüftungsöffnung, die mit der Außenseite des Gehäuses kommuniziert. Jede der inneren Seitenwände ist mit einem Klappenelement versehen, das elastisch um eine horizontale Achse an der Unterseite der inneren Seitenwand angelenkt ist und von dort nach oben und in einem Winkel von der inneren Seitenwand weg nach innen in den Gemeinschaftsdurchgang vorsteht.

In der EP 2 641 255 A1 wird eine Leistungsschalterbaugruppe offenbart, die ein Gehäuse umfasst, einen Auslösemechanismus, einen Entlüftungskanal und eine Kammer. Der im Gehäuse positionierte Auslösemechanismus kann bewirken, dass sich ein beweglicher Kontakt von einem zweiten Kontakt trennt, wenn die Schutzschalterbaugruppe einen elektrischen Fehler erkennt. Der Entlüftungskanal ist im Gehäuse ausgebildet und so positioniert, dass Gas und Schmutz, der entsteht, wenn sich der bewegliche Kontakt während des elektrischen Fehlers vom zweiten Kontakt trennt, in eine Öffnung im Gehäuse abgeführt werden. Die Kammer verfügt über ein Kammergehäuse, das mit dem Gehäuse neben der Öffnung verbunden ist, so dass die Kammer das aus der Öffnung austretende Gas und den Schmutz aufnimmt.

In der DE 10 2013 113943 A1 wird eine elektrische Schaltvorrichtung zur Aufnahme eines Paares gegenüberliegender Leistungsschalter offenbart. Diese enthält eine Schalttafel mit einer ersten Längsachse und ist dafür eingerichtet, das Paar der gegenüberliegenden Leistungsschalter zu unterstützen, um einen Zwischenraum dazwischen zu definieren, wobei der Zwischenraum eine zweite Längsachse hat, die sich im Wesentlichen parallel zu der ersten Längsachse erstreckt. Eine isolierende Barriere ist dafür angeordnet, einen Freiraumbereich mit einer dritten Längsachse zu definieren, und ist funktionell in dem Zwischenraum angeordnet, wobei sich die dritte Längsachse im Wesentlichen parallel zu der zweiten Längsachse erstreckt.

DE20212065U1, KR101229290B1, EP2871655B1 und FR2704352A1 offenbaren verschiedene Beispiele von Geräteträgern für Leistungsschalter mit unterschiedlichen Konfigurationen von Schaltgasauslasssystemen.

Es ist Aufgabe der vorliegenden Erfindung, einen Geräteträger zur Verfügung zu stellen, welcher in einem Schaltfeld mit verschiedenen elektrischen Schaltern einfach montierbar ist und einfach ein Abgassystem zum Ausleiten der Schaltgase zur Verfügung stellt.

Die erfindungsgemäße Aufgabe wird durch den Geräteträger gemäß Patentanspruch 1 gelöst. Vorteilhafte Ausgestaltungen des erfindungsgemäßen Geräteträgers sind in den Unteransprüchen 2 bis 9 angegeben. Die erfindungsgemäße Aufgabe wird ebenso durch den Schaltschrank gemäß Patentanspruch 10 gelöst. Vorteilhafte Ausgestaltungen des erfindungsgemäßen Schaltschranks sind in den Unteransprüchen 11 und 12 angegeben.

Der Geräteträger für mindestens einen elektrischen Schalter gemäß Patentanspruch 1 ist so ausgestaltet, dass der mindestens eine elektrische Schalter Auslässe von Schaltgasen an seiner Abgangsseite und/oder an seiner Eingangsseite aufweist, wobei der Geräteträger in einem Schaltschrank montierbar ist, und wobei die Schaltgase eines im Geräteträger montierten elektrischen Schalters von der Abgangsseite und/oder der Eingangsseite jeweils zur Seite/Unterseite des Geräteträgers geführt werden und von dort den Geräteträger durch ein Auslasssystem den Schaltschrank verlassen können.

Vorteilhaft hierbei ist, dass nach einem Kurzschluss die Ruß- und Kontaktabbrand-Partikel definiert aus dem elektrischen Schalter geführt werden und dadurch beispielsweise ein Schaltschrank oder eine Verteilung nicht verschmutzt werden und deshalb auch eine Reinigung vermieden wird.

In einer Ausgestaltung des erfindungsgemäßen Geräteträgers ist der mindestens eine elektrische Schalter von der Vorderseite des Geräteträgers montierbar.

Erfindungsgemäß weist der Geräteträger einen feststehenden Auslass an der Seite/Unterseite des Geräteträgers zum Verlassen der Schaltgase auf.

In einer Ausgestaltung des erfindungsgemäßen Geräteträgers umfasst dieser Kanal Türen oder entfernbare Klappen zum Anschluss weiterer Geräteträger an den Kanal.

Erfindungsgemäß ist das Auslasssystem als ein senkrecht zum Geräteträger verlaufender modularer Kanal aus beweglichen Kanalmodulen ausgebildet, dessen oberes und/oder unteres Ende aus dem Schaltschrank hinausführen kann.

In einer Ausgestaltung des Geräteträgers ist jeweils ein Kanalmodul einem Geräteträger zugeordnet.

In einer weiteren Ausgestaltung des erfindungsgemäßen Geräteträgers ist das Kanalmodul mittels eines von der Vorderseite des Geräteträgers bedienbaren Schaltmechanismus mit einem benachbarten Kanalmodul eines benachbarten Geräteträgers verbindbar. Der Schaltmechanismus kann den beweglichen Kanalmodul senkrecht zum Geräteträger verschieben.

In einer weiteren Ausgestaltung des erfindungsgemäßen Geräteträgers wird der modulare Kanal aus dem beweglichen Kanalmodulen und den feststehenden Auslässen gebildet.

In einer Ausgestaltung des erfindungsgemäßen Geräteträgers ist das Auslasssystem als ein flexibler Kanal ausgebildet, dessen erstes Ende aus dem Geräteträger und dessen zweites Ende aus dem Schaltschrank führt.

In einer Ausgestaltung ist der flexible Kanal als Schlauch ausgebildet.

Der Schaltschrank mit mindestens zwei erfindungsgemäßen Geräteträgern gemäß Patentanspruch 10 weist ein gemeinsames Auslasssystem aus, welches die Schaltgase aus dem Schaltschrank führt.

In einer Ausgestaltung des erfindungsgemäßen Schaltschranks ist in jedem Geräteträger ein elektrischer Schalter montiert. Dies elektrischen Schalter können Leistungsschalter, Lastschalter, Lasttrennschalter, Schütze oder Hybridschalter sein.

Die oben beschriebenen Eigenschaften, Merkmale und Vorteile dieser Erfindung sowie die Art und Weise, wie sie erreicht werden, werden klarer und deutlicher verständlich im Zusammenhang mit der folgenden Beschreibung der Ausführungsbeispiele, die im Zusammenhang mit den Figuren näher erläutert werden.

Dabei zeigen:
- Figuren 1A und 1B:: Geräteträger mit Auslass und Kanal an der Seite/Unterseite des Geräteträgers;
- Figur 2A und 2B:: feststehender Auslass am Geräteträger sowie bewegliches Kanalmodul am Geräteträger;
- Figuren 3A und 3B:: bewegliche Kanalmodule in Grundposition und in Position zum Bilden eines modularen Kanals;
- Figur 4:: Geräteträger mit flexiblem Kanal;
- Figur 5:: Geräteträger mit flexiblem Kanal in einer Schnittdarstellung;
- Figur 6A und 6B:: Geräteträger mit montiertem elektrischem Schalter und flexiblem Kanal aus zwei unterschiedlichen Perspektiven.

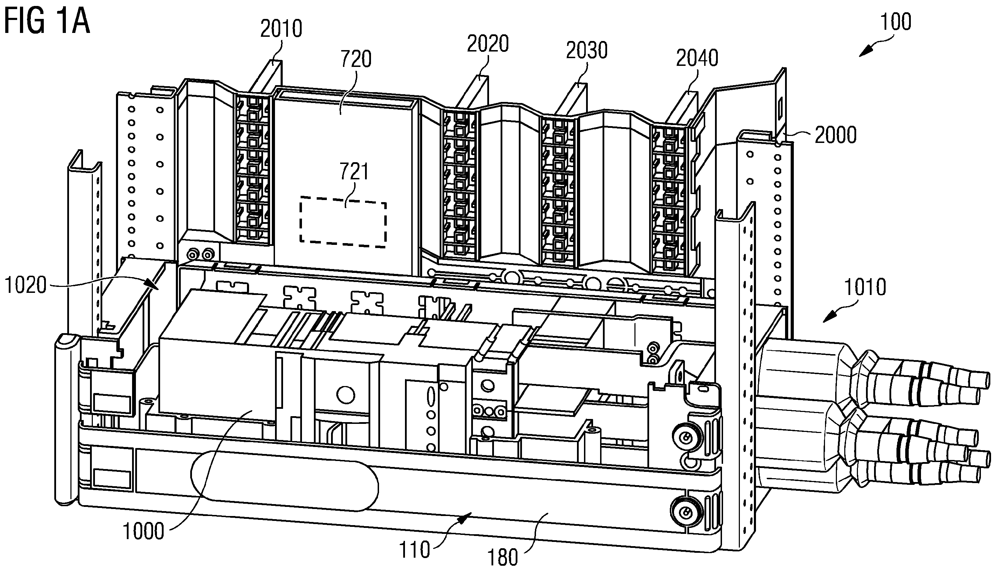

In der Figur 1A ist ein erfindungsgemäßer Geräteträger 100 für mindestens einen elektrischen Schalter 1000 dargestellt. Der mindestens eine elektrische Schalter 1000 ist in dem Geräteträger 100 montiert und weist Auslässe von Schaltgasen an seiner Abgangsseite 1010 und/oder an seiner Eingangsseite 1020 auf. Der elektrische Schalter 1000 ist von der Vorderseite 110 des Geräteträgers 100 montiert, der Geräteträger 100 selbst kann in einem Schaltschrank montiert sein.

In der Figur 1A ist der Geräteträger 100 an einer Einspeisung 2000 montiert, welche Stromschienen 2010, 2020, 2030, 2040 aufweist.

Der Geräteträger 100 selbst weist ein Gehäuse 180 auf, welches teilweise in der Figur 1A dargestellt ist.

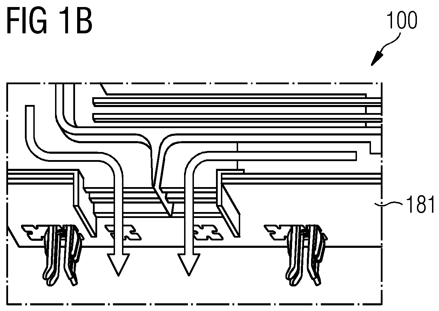

Die Schaltgase des elektrischen Schalters 1000, die beispielsweise bei einer Kurzschlussabschaltung entstehen, werden im Geräteträger 100 von der Abgangsseite 1010 und/oder der Eingangsseite 1020 jeweils zur Seite/Unterseite 120 des Geräteträger 100 geführt und können von dort den Geräteträger 100 durch ein Auslasssystem 700 den Schaltschrank verlassen. Figur 1B zeigt den erfindungsgemäßen Geräteträger 100 mit einem Teil des unteren Gehäuses 180 und in der Darstellung mit Pfeil die Strömung der Schaltgase an der Seite/Unterseite 120 des Geräteträgers 100.

Das Auslasssystem 700 des erfindungsgemäßen Geräteträgers 100 weist einen senkrecht zum Geräteträger 100 verlaufenden Kanal 720 auf, dessen oberes und/oder unteres Ende aus dem Schaltschrank hinausführt. Durch das obere und/oder untere Ende werden somit die Schaltgase, die im elektrischen Schalter 1000 entstehen aus dem Schaltschrank befördert.

Der Kanal 720 kann Türen oder entfernbare Klappen 721 aufweisen, an denen ein Auslasssystem 700 eines benachbarten weiteren Geräteträgers 100 angeschlossen werden kann. Beispielsweise kann durch Ausbrechen der entfernbaren Klappe 721 eine in Figur 1B gezeigte Auslassöffnung am Kanal 720 entstehen, an die ein Auslass eines benachbarten Geräteträgers 100 angeschlossen werden kann.

An der Auslassöffnung des Geräteträgers 100 ist ein feststehender Auslass 710 montiert, dieser befindet sich somit an der Seite/Unterseite 120 des Geräteträgers und durch ihn verlassen die Schaltgase den Geräteträger 100.

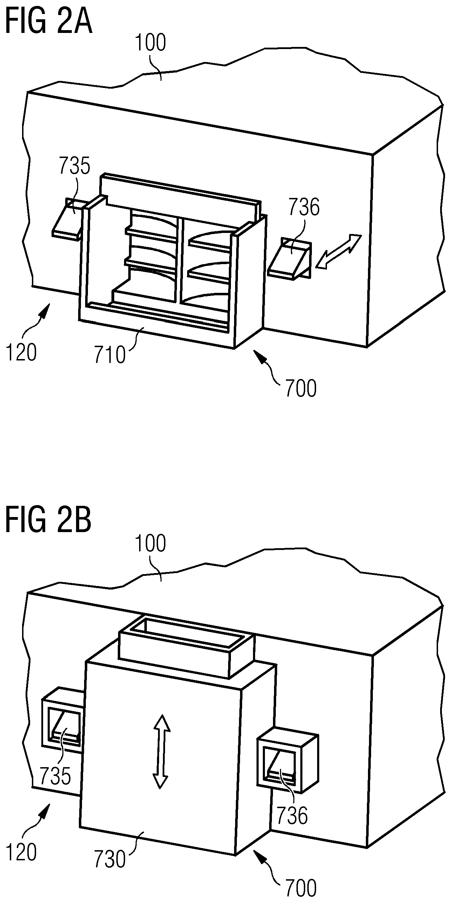

Auf den feststehenden Auslass 710 lässt sich entsprechend der Darstellung der Figur 2B ein bewegliches Kanalmodul 730 aufsetzen, dessen oberes und/oder unteres Ende aus dem Schaltschrank hinausführen kann. Mittels eines von der Vorderseite 110 des Geräteträgers 100 bedienbaren Schaltmechanismus 735, 736 ist das Kanalmodul 730 mit einem benachbarten Kanalmodul 731 eines benachbarten Geräteträgers 101 verbindbar. Entsprechend der Darstellung der Figur 2B kann mittels des bedienbaren Schaltmechanismus 735, 736 das Kanalmodul 730 in Pfeilrichtung bewegt werden, also entsprechend der Darstellung in Figur 2B nach oben oder nach unten.

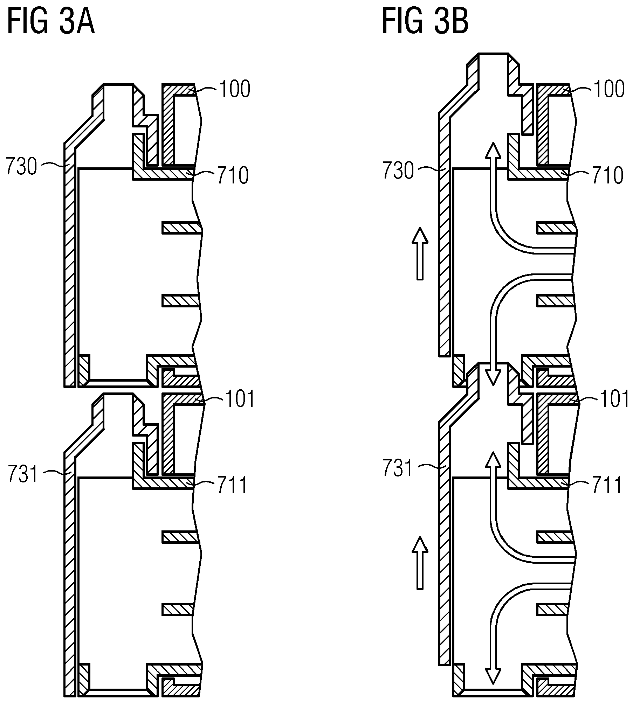

In den Figuren 3A und 3B ist ein Geräteträger 100 und ein benachbarter Geräteträger 101 dargestellt, an dessen Seite/Unterseite 120 jeweils ein feststehender Auslass 710, 711 montiert ist. Auf den feststehenden Auslass 710, 711 wurde jeweils ein bewegliches Kanalmodul 730, 731 aufgesteckt.

In der Darstellung der Figur 3A sind die Kanalmodule 730, 731 noch nicht miteinander verbunden, sie bilden noch keinen modularen Kanal. Mittel Betätigung der bedienbaren Schaltmechanismen 735, 736 von der Vorderseite 110 eines jeden Geräteträgers 100, 101 werden diese entsprechend der Darstellung der Figur 3B nach oben bewegt. Dadurch greift die Oberseite des Kanalmoduls 731 in den benachbarten feststehenden Auslass 710 ein und es bildet sich ein modularer Kanal, mit entsprechender Dichtigkeit, der dem Abschaltdruck standhält. Gleiches gilt für das bewegliche Kanalmodul 730, welches ebenfalls mit einem feststehenden Auslass 710 eines weiteren benachbarten Geräteträgers zusammenwirken kann.

Entsprechend den Figuren 2A, 2B und 3A, 3B ist jeweils ein Kanalmodul 730, 731 einem Geräteträger 100, 101 zugeordnet. Die Kanalmodule 730, 731 bilden zusammen mit den feststehenden Auslässen 710, 711 nach ihrer Verbindung einen modularen Kanal. Der Schaltmechanismus 735, 736 verschiebt den beweglichen Kanalmodul 730, 731 senkrecht zum Geräteträger 100. Dadurch kann sich ein durchgehender modularer Kanal bilden, der leicht um weitere Geräteträger 100 erweitert werden kann.

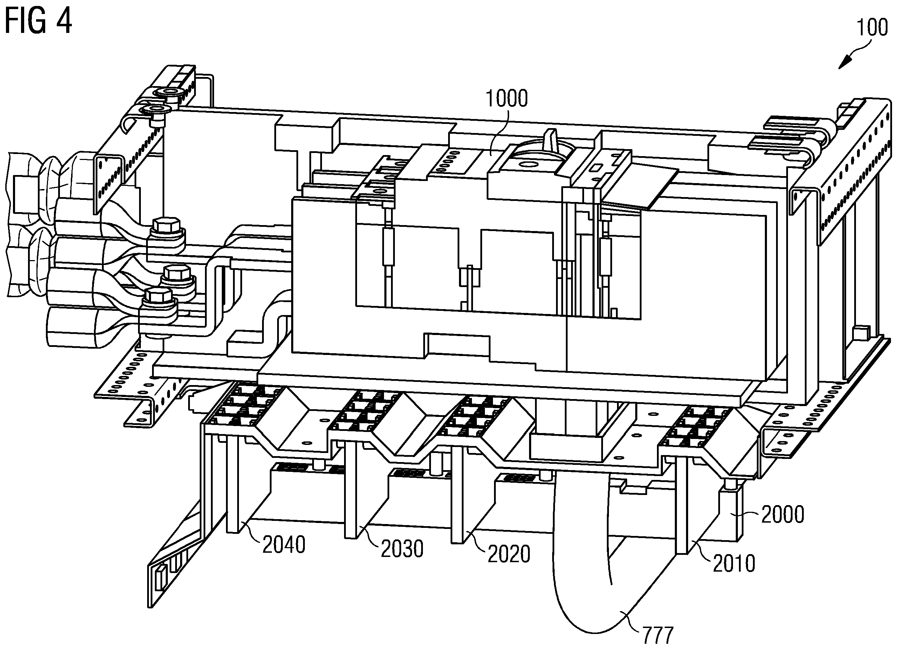

In Figur 4 ist ein erfindungsgemäßer Geräteträger 100 montiert an einer Einspeisung 2000 und mit montiertem Schalter 1000 dargestellt. In dieser Ausführungsform ist das Auslasssystem 700 als flexibler Kanal 777 ausgebildet, dessen erstes Ende aus dem Geräteträger 100 und dessen zweites Ende aus dem Schaltschrank führt. Der flexible Kanal 777 kann als Schlauch ausgebildet sein.

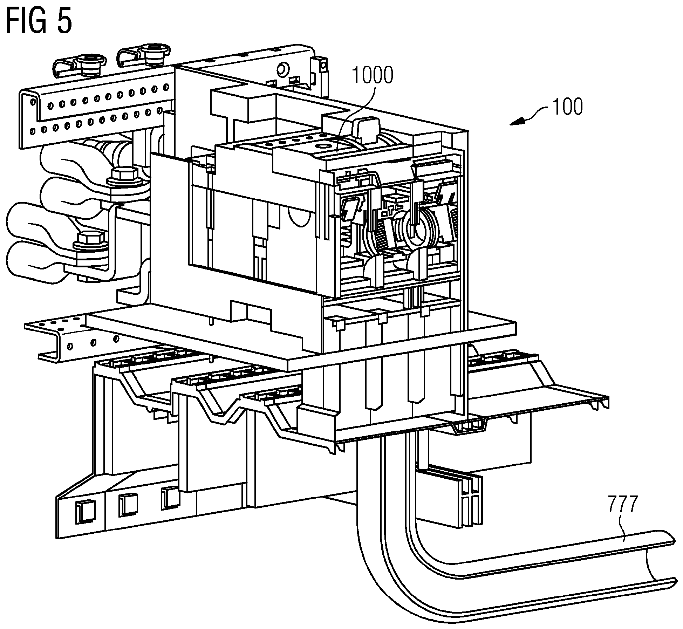

Figur 5 zeigt eine schnittbildliche Darstellung des erfindungsgemäßen Geräteträgers 100 mit montierten elektrischem Schalter 1000 und flexiblem Kanal 777.

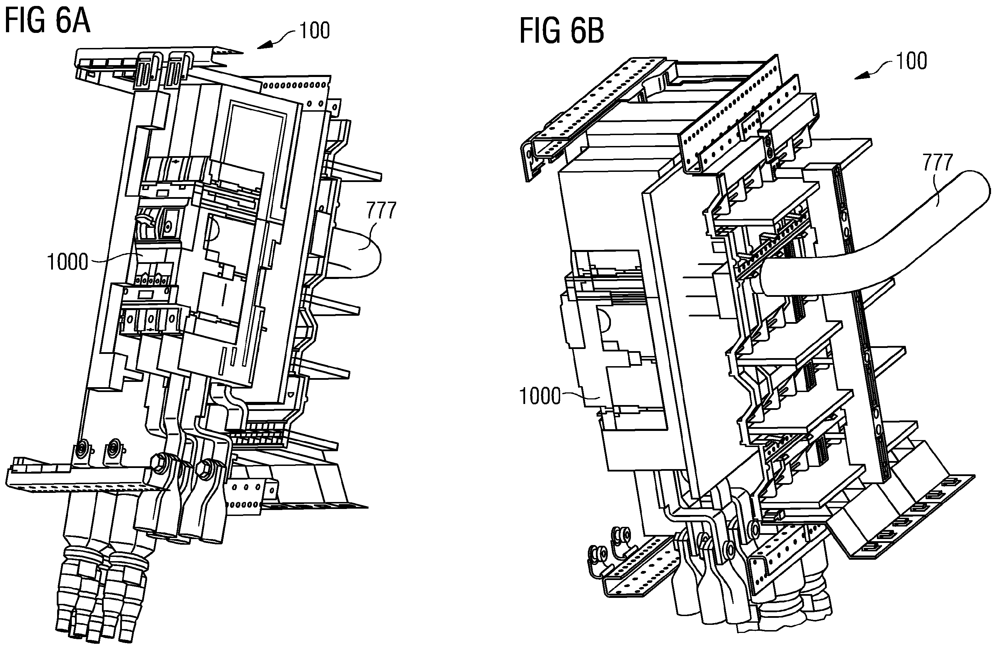

In den Figuren 6A und 6B ist der erfindungsgemäße Geräteträger mit montiertem elektrischem Schalter 1000 und flexiblem Kanal 777 aus verschiedenen Perspektiven dargestellt.

Der erfindungsgemäße Geräteträger 100 kann in einem Schaltschrank montiert sein. Typischerweise sind mindestens zwei Geräteträger 100, 101 in einem Schaltschrank montiert und weisen ein gemeinsames Auslasssystem auf, welches die Schaltgase aus dem Schaltschrank führt. In jedem Geräteträger 100, 101 kann ein elektrischer Schalter 1000 montiert sein. Diese elektrischen Schalter 1000 können beispielsweise Leistungsschalter, Lastschalter, Lasttrennschalter, Schütze oder Hybridschalter sein.

Der quer zum Geräteträger 100 verlaufende Kanal 720 ermöglicht es, die Schaltgase eines elektrischen Schalters 1000 aus dem Geräteträger 100 und aus einem Schaltschrank zu transportieren. Der Kanal 720 kann Türen beziehungsweise entfernbare Klappen 721 mit Perforationen vorsehen, sodass im Bedarfsfall Türen oder Klappen 721 ausgebrochen oder eingeklappt werden können und in die so entstandenen Öffnungen können die Schaltgase über die Abgaskanäle in den senkrecht verlaufenden Kanal 720 eingeleitet werden. Das obere und untere Ende des Kanals 720 wird aus dem Schaltschrank herausgeleitet.

Der modulare Kanal aus Kanalmodulen 730, 731 ermöglicht ein untereinander Verbinden nach Einbau des erfindungsgemäßen Geräteträgers 100 im Schaltschrank.

Die einzelnen Auslässe der Schaltgase aus dem Geräteträger 100 können über ein flexibles Schlauchsystems am Ende des Schlauchsystems aus dem Schaltschrank an beliebiger Stelle herausgeführt werden. Die einzelnen Schläuche der elektrischen Schalter 1000 können aber auch jeweils separat einzeln an beliebiger Stelle aus dem Schaltschrank geführt werden.

## Patentansprüche

1. Geräteträger (100) für mindestens einen elektrischen Schalter (1000), wobei der mindestens eine elektrische Schalter (1000) Auslässe von Schaltgasen an seiner Abgangsseite (1010) und/oder an seiner Eingangsseite (1020) aufweist, wobei der Geräteträger (100) in einem Schaltschrank montierbar ist,
wobei die Schaltgase eines im Geräteträger (100) montierten elektrischen Schalters (1000) von der Abgangsseite (1010) und/oder der Eingangsseite (1020) jeweils zur Seite/Unterseite (120) des Geräteträgers (100) geführt werden und von dort den Geräteträger (100) durch ein Auslasssystem (700) den Schaltschrank verlassen können, wobei das Auslasssystem (700) einen feststehenden Auslass (710) an der Seite/Unterseite (120) des Geräteträgers (100) zum Verlassen der Schaltgase aufweist,
**dadurch gekennzeichnet, dass** das Auslasssystem (700) als ein senkrecht zum Geräteträger (100) verlaufender modularer Kanal aus beweglichen Kanalmodulen (730, 731) ausgebildet ist, dessen oberes und/oder unteres Ende aus dem Schaltschrank hinausführen kann.

2. Geräteträger (100) gemäß Anspruch 1, wobei der mindestens eine elektrische Schalter (1000) von der Vorderseite (110) des Geräteträgers (100) montierbar ist.

3. Geräteträger (100) gemäß Anspruch 2, bei dem der Kanal (720) Türen oder entfernbare Klappen (721) umfasst zum Anschluss weiterer Geräteträger (100) an den Kanal (720).

4. Geräteträger (100) gemäß Anspruch 1, bei dem jeweils ein Kanalmodul (730, 731) einem Geräteträger (100, 101) zugeordnet ist.

5. Geräteträger (100) gemäß Anspruch 1 oder 4, bei dem das Kanalmodul (730) mittels eines von der Vorderseite (110) des Geräteträgers (100) bedienbaren Schaltmechanismus (735, 736) mit einem benachbarten Kanalmodul (731) eines benachbarten Geräteträgers (101) verbindbar ist.

6. Geräteträger (100) gemäß Anspruch 5, bei dem der Schaltmechanismus (735, 736) den beweglichen Kanalmodul (730, 731) senkrecht zum Geräteträger (100) verschieben kann.

7. Geräteträger (100) gemäß Anspruch 6, bei dem der modulare Kanal aus den beweglichen Kanalmodulen (730, 731) und den feststehenden Auslässen (710, 711) gebildet wird.

8. Geräteträger (100) gemäß einem der vorherigen Ansprüche, bei dem das Auslasssystem (700) als ein flexibler Kanal (777) ausgebildet ist, dessen erstes Ende aus dem Geräteträger (100) und dessen zweites Ende aus dem Schaltschrank führt.

9. Geräteträger (100) gemäß Anspruch 8. bei dem der flexible Kanal (777) als Schlauch ausgebildet ist.

10. Schaltschrank mit mindestens zwei Geräteträgern (100, 101) gemäß einem der vorherigen Ansprüche, bei dem die mindestens zwei Geräteträger (100, 101) ein gemeinsames Auslasssystem (700) aufweisen, welches die Schaltgase aus dem Schaltschrank führt.

11. Schaltschrank gemäß Anspruch 10, bei dem in jedem Geräteträger (100, 101) ein elektrischer Schalter (1000) montiert ist.

12. Schaltschrank gemäß Anspruch 11, bei dem die elektrischen Schalter (1000) Leistungsschalter, Lastschalter, Lasttrennschalter, Schütze oder Hybridschalter sind.

## Claims

1. Device support (100) for at least one electrical switch (1000), wherein the at least one electrical switch (1000) has outlets for switching gases on its output side (1010) and/or on its input side (1020), wherein the device support (100) can be installed in a switch cabinet,
wherein the switching gases of an electrical switch (1000) installed in the device support (100) are led from the output side (1010) and/or the input side (1020) to the side/bottom (120) of the device support (100) and from there can leave the device support (100) and the switch cabinet through an outlet system (700), wherein the outlet system (700) has a fixed outlet (710) on the side/bottom (120) of the device support (100) for the switching gases to leave,
**characterized in that**
the outlet system (700) is in the form of a modular channel comprising movable channel modules (730, 731) running perpendicularly to the device support (100), the upper and/or lower end of which channel can lead out of the switch cabinet.

2. Device support (100) according to Claim 1, wherein the at least one electrical switch (1000) can be installed from the front (110) of the device support (100).

3. Device support (100) according to Claim 2, in which the channel (720) comprises doors or removable flaps (721) for connecting further device supports (100) to the channel (720).

4. Device support (100) according to Claim 1, in which each channel module (730, 731) is assigned to a device support (100, 101).

5. Device support (100) according to Claim 1 or 4, in which the channel module (730) can be connected to an adjacent channel module (731) of an adjacent device support (101) by means of a switching mechanism (735, 736) operable from the front (110) of the device support (100).

6. Device support (100) according to Claim 5, in which the switching mechanism (735, 736) can move the movable channel module (730, 731) perpendicularly to the device support (100).

7. Device support (100) according to Claim 6, in which the modular channel is formed from the movable channel modules (730, 731) and the fixed outlets (710, 711).

8. Device support (100) according to any of the preceding claims, in which the outlet system (700) is in the form of a flexible channel (777), the first end of which leads out of the device support (100) and the second end of which leads out of the switch cabinet.

9. Device support (100) according to Claim 8, in which the flexible channel (777) is in the form of a hose.

10. Switch cabinet having at least two device supports (100, 101) according to any of the preceding claims, in which the at least two device supports (100, 101) have a common outlet system (700) which leads the switching gases out of the switch cabinet.

11. Switch cabinet according to Claim 10, in which an electrical switch (1000) is installed in each device support (100, 101).

12. Switch cabinet according to Claim 11, in which the electrical switches (1000) are circuit breakers, load interrupter switches, switch disconnectors, contactors or hybrid switches.

## Revendications

1. Support d'appareil (100) pour au moins un commutateur électrique (1000), l'au moins un commutateur électrique (1000) présente des sorties pour les gaz de commutation sur sa face de sortie (1010) et/ou sur sa face d'entrée (1020), dans lequel le support d'appareil (100) peut être monté dans une armoire électrique,
dans lequel les gaz de commutation d'un commutateur électrique (1000) monté dans le support d'appareil (100) sont acheminés respectivement depuis la face de sortie (1010) et/ou la face d'entrée (1020) vers la face/la face inférieure (120) du support d'appareil (100) et peuvent ensuite quitter le support d'appareil (100) par un système de sortie (700) de l'armoire électrique, dans lequel le système de sortie (700) présente une sortie fixe (710) sur la face/la face inférieure (120) du support d'appareil (100) pour l'évacuation des gaz de commutation,
**caractérisé en ce que** le système de sortie (700) est conçu comme un canal modulaire s'étendant perpendiculairement au support d'appareil (100) et composé de modules de canal mobiles (730, 731), dont l'extrémité supérieure et/ou inférieure peut sortir de l'armoire de commande.

2. Support d'appareil (100) selon la revendication 1, dans lequel l'au moins un commutateur électrique (1000) peut être monté depuis la face avant (110) du support d'appareil (100).

3. Support d'appareil (100) selon la revendication 2, dans lequel le canal (720) comprend des portes ou des volets amovibles (721) pour connecter d'autres supports d'appareil (100) au canal (720).

4. Support d'appareil (100) selon la revendication 1, dans lequel un module de canal (730, 731) est attribué à un support d'appareil (100, 101).

5. Support d'appareil (100) selon la revendication 1 ou 4, dans lequel le module de canal (730) peut être connecté à un module de canal adjacent (731) d'un support d'appareil adjacent (101) au moyen d'un mécanisme de commutation (735, 736) actionnable depuis la face avant (110) du support d'appareil (100).

6. Support d'appareil (100) selon la revendication 5, dans lequel le mécanisme de commutation (735, 736) peut déplacer le module de canal mobile (730, 731) perpendiculairement au support d'appareil (100).

7. Support d'appareil (100) selon la revendication 6, dans lequel le canal modulaire est formé à partir des modules de canal mobiles (730, 731) et des sorties fixes (710, 711).

8. Support d'appareil (100) selon l'une des revendications précédentes, dans lequel le système de sortie (700) est conçu comme un canal flexible (777) dont une première extrémité sort du support d'appareil (100) et dont la seconde extrémité sort de l'armoire de commande.

9. Support d'appareil (100) selon la revendication 8, dans lequel le canal flexible (777) est conçu comme un tuyau.

10. Armoire de commande avec au moins deux supports d'appareils (100, 101) selon l'une des revendications précédentes, dans laquelle les au moins deux supports d'appareils (100, 101) présentent un système de sortie commun (700) qui conduit les gaz de commutation hors de l'armoire de commande.

11. Armoire de commande selon la revendication 10, dans laquelle un commutateur électrique (1000) est monté dans chaque support d'appareil (100, 101).

12. Armoire de commande selon la revendication 11, dans laquelle les commutateurs électriques (1000) sont des disjoncteurs, des commutateurs de charge, des sectionneurs de charge, des contacteurs ou des commutateurs hybrides.
